# FASCICULE DE BREVET EUROPEEN

(11) **EP 0 592 257 B1**
(45) Date de publication et mention de la délivrance du brevet: **07.07.1999**
(21) Numéro de dépôt: 93401998.5
(22) Date de dépôt: 03.08.1993
(51) Int. Cl.: H04L 12/56, H04Q 3/00

(54) **Procédé et agencement de communication, entre unités, supports de mode paquet, du coeur d'une installation de communication**
Verfahren und Vorrichtung zur Datenübertragung zwischen Paketbetrieb-unterstützenden Einheiten im Zentrum einer Übertragungseinrichtung
Method and arrangement for communicating between units supporting the packet mode in the centre of a communication installation

(30) Priorité: 07.08.1992 FR 9209838
(43) Date de publication de la demande: 13.04.1994
(73) Titulaire: ALCATEL, 75008 Paris (FR)
(72) Inventeur: Gass, Raymond, F-67150 Bolsenheim (FR)
(74) Mandataire: Lamoureux, Bernard

(56) Documents cités:
- EP-A- 0 468 442
- EP-A- 0 473 066
- WO-A-84/00266

## Description

L'invention concerne un procédé et un agencement de communication entre unités de coeur d'une installation de communication qui supportent le mode paquet et qui sont interconnectées en point-à-point.

Le document WO 84/00266 décrit un procédé et un système de commutation de paquets dans lesquels des adresses physiques sont attribuées aux paquets par des contrôleurs d'accès qui les établissement en fonction de paquets initiaux d'établissement de chemin.

La demande de brevet français référencée FR-A-2 665 314 décrit un réseau d'interconnexion pour coeur d'installation de communication de type numérique, à intégration des services, par lequel les unités modulaires spécialisées constitutives de ce coeur sont reliées en point à point, en fonction de leurs besoins en matière de communication.

Un tel réseau est prévu pour incorporer un sous-réseau relatif aux unités supports de mode paquet, c'est à dire celles qui interviennent directement ou indirectement dans ce coeur à l'occasion des commutations de données mises sous forme de paquets. De manière classique, de tels paquets de données sont commutés au niveau de commutateurs qui ont une structure centralisées en réseau distribué en bus ou en boucle, chaque commutateur comportant une mémoire dans laquelle les paquets entrants sont temporairement conservés jusqu'au moment où ils sont transmis vers des destinations qui dépendent des indications d'adresse contenues dans leurs en-têtes respectives.

L'invention propose un procédé de communication entre unités supports de mode paquet interconnectées au coeur d'une installation de communication par des liaisons point-à-point structurées physiquement et régies temporellement de manière identique, caractérisé en ce que la transmission d'un paquet entre deux unités supports de mode paquet de l'installation implique l'envoi préalable d'une requête préalable de l'unité désireuse d'émettre à l'unité destinataire et l'envoi en réponse d'un acquiescement correspondant de cette unité destinataire.

L'invention propose aussi un agencement de communication entre unités supports de mode paquet interconnectées au coeur d'une installation de communication par des liaisons point-à point; ces liaisons formant un sous-réseau de communication où toutes les liaisons sont structurées physiquement et régies temporellement de manière identique.

Selon une caractéristique de l'invention cet agencement constitue un commutateur asynchrone de type éclaté où chaque unité support de mode paquet, quel que soit son type, comporte un même circuit de communication de paquets, auquel les liaisons point-à-point aboutissant à l'unité sont reliées par l'intermédiaire d'un module de commutation à large bande, pour conditionner sous forme d'une suite de cellules chaque paquet à transmettre, vers une autre unité support de mode paquet de l'installation, par l'unité dont ce circuit fait partie, ainsi que pour assurer la reconstitution d'un paquet au niveau de cette unité qui le comporte à partir des cellules correspondantes reçues au travers d'une des liaisons point-à-point reliées à cette unité.

L'invention, ses caractéristiques et ses avantages sont précisés dans la description qui suit en liaison avec les figures évoquées ci-dessous.

La figure 1 présente un schéma de principe d'un exemple de sous-réseau d'interconnexion entre unités supportant le mode paquet d'une installation de communication, de type numérique à intégration de services, selon le document FR-A-2 665 314.

La figure 2 présente un schéma de principe d'une unité, de type coupleur, qui est ici prévue pour être associée à des liens supports de réseau Ethernet.

La figure 3 présente un exemple de structure de transmission de paquets pour sous-réseau support de mode paquet.

La figure 4 présente un schéma simplifié de sous-réseau paquet.

La figure 5 présente un diagramme relatif à la détermination d'itinéraire et à l'envoi de paquet dans le sous-réseau schématisé en figure 4.

Comme déjà indiqué dans le document FR-A 2 665 314 mentionné ci-dessus, les unités formant le coeur d'une installation qui comporte un sous-réseau paquet, selon l'invention, sont supposées aménagées sur des cartes porteuses individuelles, non représentées, destinées à être regroupées à l'intérieur d'une même structure, par exemple de type armoire ou coffret.

Dans une première forme de réalisation, les diverses cartes porteuses du coeur sont interconnectées par l'intermédiaire de liaisons, de type point-à-point, portées par une carte, dite de fond de panier, à laquelle les autres cartes viennent se connecter au niveau de positions de carte comportant des organes de connexion appropriés.

Il est également possible d'associer plusieurs ensembles de type coeur d'installation, tel que défini ci-dessus, pour constituer un ensemble de taille plus grande, toutefois ceci ne sera pas développé ici.

Une installation comporte généralement au moins une carte porteuse d'unité de commande 1 qui est organisée autour d'au moins un processeur associé à un ensemble de mémoires mortes et/ou vives, ces divers éléments constitutifs bien connus de l'homme de métier n'étant pas représentés ici.

Une installation comporte aussi des cartes individuelles affectées à des unités d'entrée/sortie ou coupleurs 2, tels ceux référencés 2A à 2F, destinés à permettre l'échange d'informations entre des instruments de communication, tels que des postes, des terminaux ou tout autre équipement utilisateur ou fournisseur de données, par exemple un équipement de type serveur.

Ces instruments de communication connus qui ne sont pas figurés ici, sont susceptibles d'être rattachés, comme il est connu, soit directement à l'installation par des liaisons de communication, le plus souvent filaires, soit indirectement par l'intermédiaire des liens qui relient l'installation à d'autres installations auxquelles certains des instruments sont alors rattachés.

Ces dites autres installations et les liens les desservant, qui ne sont pas directement concernés par la présente invention, ne sont ni figurés ni décrits ici; il en est de même pour les liaisons reliant les coupleurs 2 aux instruments de communication qui leur sont éventuellement rattachés.

Une installation comporte le plus souvent une ou plusieurs cartes d'unité auxiliaire, telle 3Z, ces unités auxiliaires assistent fonctionnellement les autres unités 1 ou 2 dans certaines de leurs opérations, en assurant en particulier une même pour au moins certaines de ces unités par exemple une fonction de passerelle vers un ensemble identique ou compatible ou une fonction de gestion spécifique au profit des autres unités de l'installation.

Comme indiqué plus haut, chaque unité 1, 2 ou 3 est reliée par des liaisons, de type point-à-point, aux unités avec lesquelles elle est amenée à communiquer dans l'installation.

Chaque liaison point-à-point entre deux unités est prévue adaptée aux besoins spécifiques des unités qu'elle relie et peut donc, si besoin est, être constituée et gérée de manière totalement différente des autres liaisons de l'installation.

Les unités participant au sous-réseau paquet, selon l'invention, sont par exemple une unité de commande 1, trois coupleurs 2B, 2E et 2F par lesquels transitent des informations transmises en mode paquet et une unité auxiliaire 3Z d'interface permettant l'accès au mode paquet d'unités ne supportant pas directement ce mode elles-mêmes. Les unités reliées par le sous-réseau paquet se caractérisent en ce qu'elles constituent en fait un commutateur asynchrone réparti dans lequel chaque unité est maître d'elle-même pour tout ce qui concerne les paquets qu'elle fait transiter.

Les unités 1, 2B, 2E, 2F et 3Z du sous-réseau paquet sont reliées entre elles en point-à-point par des liaisons référencées L2 qui sont identiquement constituées et identiquement régies.

Au moins certaines de ces unités sont aussi reliées à d'autres unités de l'installation par des liaisons non représentées qui sont régies de manière différente, même si ces liaisons ont éventuellement une constitution physique identique.

Dans une forme de réalisation, les liaisons L2 comportent chacune quatre conducteurs distincts qui se présentent par exemple sous forme de quatre pistes parallèles adjacentes sur la carte de fond de panier, de même que les quatre pistes conductrices des liaisons entre unités qui supportent le mode circuit, telles que décrites dans la demande de brevet français 2 680 930 (9110736).

Les unités 2B, 2E, 2F sont censées représenter différents coupleurs de type paquet, tel que par exemple un coupleur permettant de relier l'installation à un réseau du type à jeton en ce qui concerne l'unité 2B ou des coupleurs permettant de relier l'installation à un ou plusieurs réseaux de type Ethernet en ce qui concerne les unités 2E et 2F.

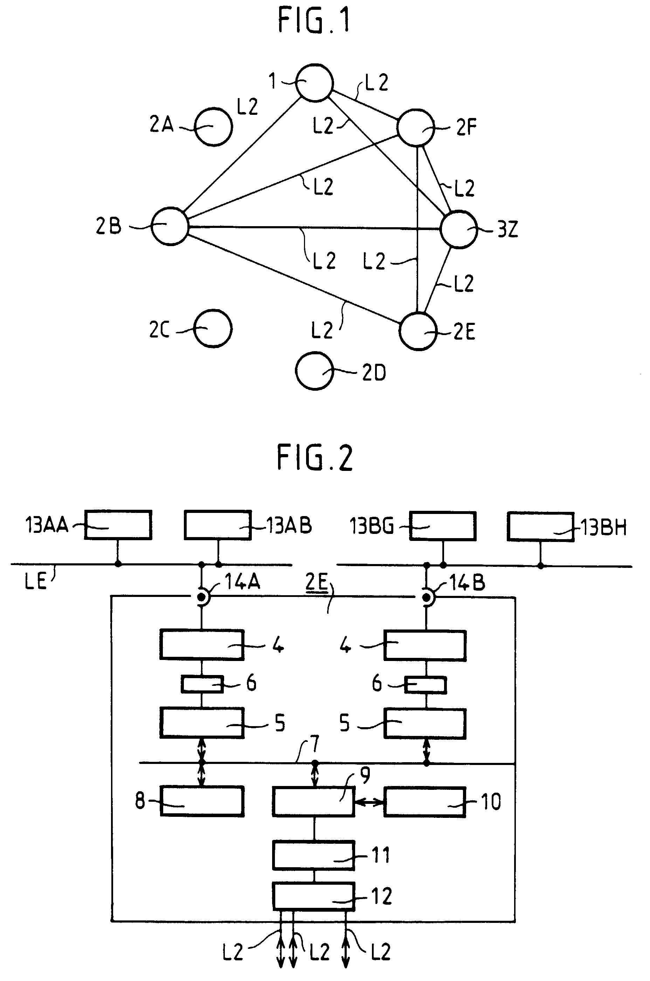

Un schéma de principe d'une unité est présenté à titre d'exemple sur la figure 2, cette unité étant une unité 2E ici supposée individuellement reliée à deux liens LE supports de réseau Ethernet par deux équipements émetteurs récepteurs de données 4 appropriés.

Chaque équipement 4 qui est susceptible d'être d'un modèle classique pour ce type de réseau, est relié à un contrôleur de communications 5, via un dispositif d'isolement 6.

Chacun des contrôleurs 5 gère les échanges de l'unité 2E qui le comporte avec le lien de réseau Ethernet auquel il est relié par l'intermédiaire d'un équipement émetteur-récepteur 4.

Cette gestion implique notamment que chaque contrôleur 5 puisse déterminer la destination d'un paquet, transmis à l'installation par la liaison LE à laquelle il est relié, à partir des données contenues dans l'en-tête de ce paquet, afin de permettre l'acheminement dudit paquet. Les opérations de communication en sens inverse, constituées par l'injection de paquets sur une liaison LE à partir de l'installation, sont également assurées par le contrôleur 5 associé à cette liaison.

Trois possibilités d'orientation coexistent au niveau d'une unité, suivant la destination des paquets reçus via une liaison LE, en premier lieu, si un paquet entrant est destiné à un instrument de communication connecté au même accès de lien que celui par lequel ce paquet est reçu, il n'est besoin ni d'intervention ni d'action d'orientation de l'unité réceptrice.

Si un paquet entrant est destiné un instrument de communication, rattaché à un autre accès de l'unité réceptrice qui est prévu pour un lien de même type que celui par lequel le paquet entrant est reçu, il y a transfert local dans l'unité, sans que cette dernière n'intervienne sur les paquets transmis.

Si un paquet entrant est destiné à un instrument de communication qui n'est pas rattaché à un lien, tel que LE, accédant directement à l'unité réceptrice, il doit y avoir transfert entre deux unités du sous-réseau paquet de l'installation par l'intermédiaire d'une liaison L2.

L'unité ayant reçu le paquet considéré intervient alors sur ce paquet de manière à le mettre sous une forme qui permette son acheminement par l'intermédiaire d'une liaison L2, en respectant le processus et les contraintes relatives à une telle liaison.

Comme rappelé plus haut, les informations envoyées en mode paquet par l'intermédiaire d'un lien, tel que par exemple un lien LE, support de réseau Ethernet, à une installation sont précédées d'un en-tête, par exemple selon la norme IEEE 802, qui est transmis au début de chaque paquet et qui comporte les adresses de destination et de source du paquet.

Comme indiqué plus haut, ces adresses sont lues par le contrôleur 5 qui voit ce paquet à son arrivée et elles sont mises en mémoire dans une table de correspondance en mémoire tampon (8) d'unité avec les adresses par rapport à l'unité du lien (ou du contrôleur 5) par lequel le paquet est parvenu à l'unité.

Chaque unité enregistre donc quelles sont les instruments de communication susceptibles de servir de sources de paquets qui sont rattachés à elle, au fur et à mesure de l'envoi de paquets par chacun de ces instruments.

Ainsi par exemple, si un instrument de communication 13AA d'un réseau Ethernet transmet des paquets à l'unité 2E au travers d'un accès 14A de cette unité, auquel est relié le lien support LE de ce réseau (figure 2), il y a enregistrement par l'unité 2E de l'adresse de source correspondant à l'instrument de communication 13AA, telle que fournie par l'en-tête du premier paquet reçu de cet instrument, en liaison avec l'adresse locale repérant physiquement, dans l'unité, l'accès 14A par l'intermédiaire duquel ce paquet est parvenu.

Eventuellement, ces adresses locales d'accès relatives à une unité permettent aussi de repérer les liens ou liaisons aboutissant à cette unité au niveau des accès.

Chaque unité du sous-réseau paquet est donc à même de déterminer, si un paquet arrivant provient ou non d'un instrument de communication déjà catalogué, par simple comparaison de l'adresse de source, relative à cet instrument contenue dans l'en-tête du paquet, avec les adresses de source déjà mémorisées.

Dans la mesure où l'en-tête de chaque paquet, reçu au niveau d'un premier accès d'une unité pour transmission au travers d'une installation, contient aussi une adresse de destination, il est prévu d'enregistrer, dans la table de traduction de l'unité réceptrice, l'adresse du second accès de l'installation au travers duquel est susceptible d'être atteint l'instrument de communication désigné, une fois l'installation traversée.

Cet enregistrement est effectué dès qu'a été déterminé le chemin à utiliser dans l'installation, pour une adresse de source et une adresse de destination données, il est ensuite exploité par l'unité pour la commande du module de commutation 11 qu'elle comporte et pour la constitution des divers en-têtes de routage relatifs à tout nouveau paquet provenant de la même source et ayant même destination.

Chaque unité du sous-réseau paquet examine donc l'en-tête de chacun des paquets qu'elle reçoit d'un lien au travers de chacun des accès de lien dont elle dispose pour déterminer, par comparaison et dans chaque cas, si l'adresse de destination reçue en-tête d'un paquet correspond à une adresse de destination connue de l'unité, car déjà reçue auparavant et toujours enregistrée, ou si cette adresse est considérée comme inconnue de cette unité.

En effet, il peut s'avérer préférable de ne conserver que les adresses les plus utilisées en éliminant les adresses inexploitées au delà d'un laps de temps déterminé.

Lorsque l'adresse de destination et l'adresse de source figurant dans l'en-tête d'un paquet arrivant correspondent respectivement à un couple d'adresses, l'une de destination et l'autre de source, déjà mémorisées dans l'unité, cette dernière exploite la table de correspondance qu'elle comporte pour transférer le paquet arrivant considéré, dans des conditions qui seront évoquées plus loin.

En application de ce qui a été exposé plus haut, l'exploitation de la table de correspondance peut conduire à une absence d'intervention de l'unité, si par exemple la destination est atteinte par l'intermédiaire du même lien que celui par l'intermédiaire duquel le paquet est parvenu à l'unité, par exemple si l'instrument de communication servant de source, tel 13AA, et le destinataire, tel 13AB, sont tous deux desservis par le même lien support LE d'un réseau à jeton ( voir figure 2).

Par contre, cette exploitation conduit à une intervention du circuit de communication de paquets 9 agissant en tant qu'interface sur les paquets successivement transmis, si ces paquets doivent transiter de l'un ou l'autre des liens, tels que par exemple LE, vers l'une ou l'autre des liaisons L2 ou réciproquement

Lorsque l'adresse de destination d'un paquet reçu n'est pas antérieurement connue, ce qui se produit à chaque fois qu'un instrument de communication émet vers un destinataire avec lequel il n'a pas communiqué, au moins récemment, l'unité recevant ce paquet doit s'arranger pour savoir ce qu'elle a à faire pour que le paquet soit convenablement transmis.

A cet effet, toute unité du sous-réseau paquet se trouvant dans cette situation, est susceptible de diffuser ce paquet, soit en totalité soit en partie, suivant sa longueur, par l'intermédiaire des liaisons L2 et du ou des liens reliés à elle.

Le traitement des paquets, exploités pour la détermination d'un chemin de transmission, est régi par les procédures prévues par ailleurs à cet effet, lorsqu'ils sont émis sur les liens tels que LE, supposé de type support de réseau Ethernet à titre d'exemple, il ne sera donc pas développé ici.

La diffusion d'au moins une partie de paquet, nécessaire à la détermination d'un chemin de transmission empruntant l'une des liaisons L2 entre unités du sous-réseau paquet de l'installation est réalisée d'une manière qui sera développée plus loin et qui est ici exploitée par chacune des unités concernées pour enregistrer quels sont les différents instruments de communication qui sont accessibles par l'intermédiaire de chacune des liaisons L2 reliées à elle-même, l'adresse de source fournie étant associée, pour exploitation ultérieure, à l'adresse repérant l'accès auquel aboutit, dans l'unité, la liaison L2 ayant transmis ce paquet.

Toutefois, l'acheminement de tout ou partie d'un paquet entre deux unités de sous-réseau paquet d'une installation doit tenir compte des contingences propres à cette installation dont on sait que, multiservices, elle est obtenue par association de sous-réseaux spécialisés indépendants qui relient entre elles des unités dont certaines sont susceptibles d'être desservies par plus d'un de ces sous-réseaux, en raison de leur fonction.

Selon l'invention, il est prévu d'associer une indication supplémentaire d'adresse à chaque paquet dont l'acheminement est à effectuer par une liaison L2 de sous-réseau paquet, pour permettre l'orientation correcte de ce paquet vers cette liaison L2. Cette indication supplémentaire d'adresse est par exemple fournie par le contrôleur 5 ayant traité le paquet considéré.

Dans les unités de sous-réseau paquet ici envisagées, l'association d'une indication d'adresse supplémentaire, à un paquet reçu par l'intermédiaire d'un équipement émetteur-récepteur 4, s'effectue au niveau d'un circuit de communication 9 chargé par ailleurs de préparer ce paquet en vue de sa transmission par liaison L2 dans l'installation.

Dans la réalisation envisagée en figure 2, un bus commun 7 interconnecte les contrôleurs 5 des équipements 4 de l'unité 2E, la mémoire vive 8 qui sert aussi de tampon pour les échanges et le circuit de communication 9 qui gère l'accès aux liaisons point-à-point L2 aboutissant à l'unité 2E dans l'installation.

Le circuit de communication d'une unité est supposé supervisé par un processeur 10 et il est relié à un module de commutation 11 apte à exploiter les indications d'adresse supplémentaire associées aux paquets reçus des équipements émetteurs récepteurs 4, pour orienter ces paquets vers celle des liaisons L2 reliées qui est à emprunter.

De manière habituelle en la matière, une interface de mise en phase 12 est insérée entre le module de commutation 11 et les liaisons L2.

Le module de commutation 11 est par exemple un élément de commutation large bande dotée de seize accès bidirectionnels tel qu'évoqué dans l'article intitulé "Techniques large bande" publié dans le numéro 3 du volume 65 de la Revue des Télécommunications Alcatel, il est prévu pour assurer une commutation spatiale des cellules qu'il reçoit en entrée après avoir assuré la traduction de leurs en-têtes respectives de manière à les orienter en sortie.

Ceci implique que, pour des raisons de compromis technique, tout paquet P à transmettre entre unités du sous-réseau paquet de l'installation soit découpé en cellules, si sa longueur excède la longueur maximale retenue pour une cellule, ceci implique aussi que les unités puissent temporairement stocker les cellules des paquets en cours de transmission.

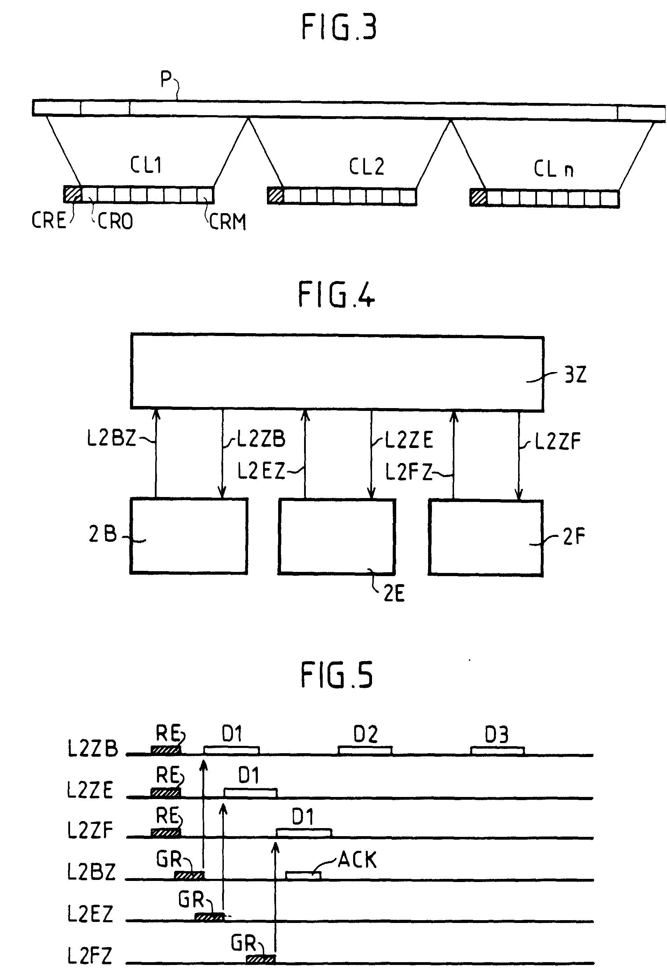

Dans un exemple de réalisation, il est prévu la mise en oeuvre de cellules, telles CL1, CL2, CLn sur la figure 3, composées chacune d'un nombre limité d'éléments qui comportent chacun un même nombre de bits, par exemple soixante-huit, chaque cellule comportant un élément d'entête CRE suivi par exemple d'un nombre maximal de "m" éléments de transmission de données de paquet CR, "m" étant par exemple fixé à huit.

Chaque élément comporte un champ de commande et un champ pour les données.

Chaque élément d'en tête contient notamment des données destinées à être exploitées pour le routage de la cellule qui le comporte par les modules de commutation 11 que cette cellule va rencontrer dans l'installation, ainsi que des données qui permettront de reconstituer le paquet dont ladite cellule est issue, en fin de transit à l'intérieur de l'installation.

Selon l'invention, les transmissions des cellules par l'intermédiaire des liaisons L2, de type point-à point, entre unités d'une installation s'effectuent selon une procédure impliquant l'envoi d'une requête de l'unité désireuse d'émettre vers l'unité avec laquelle elle veut communiquer et d'un acquiescement de la part de l'unité demandée. Ceci permet à une unité demandée d'agir sur le flot de données de paquet qui lui est destiné.

Cette action qui peut être gérée à bas niveau dans l'unité demandée, est modulée en fonction des possibilités de traitement dont dispose cette unité et des priorités qui s'imposent successivement à elle au cours du temps, en particulier lorsque plusieurs unités désirent émettre vers elle.

Lorsque les liaisons L2, sont du type à quatre conducteurs évoqués plus haut, deux conducteurs sont réservés pour chaque sens de transmission, l'unité demanderesse envoie sa requête sur son sens de transmission de liaison L2; cette requête est par exemple contenue dans un élément d'en-tête spécifique.

L'unité avec laquelle plusieurs autres unités veulent communiquer régle elle-même la contention entre ces unités demanderesses et désigne celle dont l'émission est temporairement autorisée en lui envoyant un acquiescement.

Chaque unité dispose de moyens de contention, lui permettant de sélectionner d'une manière classique qui ne sera pas décrite ici, celle parmi les unités simultanément demanderesses à laquelle elle adresse un acquiescement afin de l'autoriser à émettre vers elle.

Cet acquiescement est éventuellement transmis à l'unité demanderesse sélectionnée sous la forme d'un élément spécifique dans une autre forme de réalisation il est constitué par un signal, correspondant à un niveau zéro électrique, l'un ou l'autre, suivant le cas, est appliqué sur les fils de liaison L2, entre l'unité demanderesse sélectionnée et l'unité demandée, qui sont réservés à l'unité demandée pour ses émissions.

A réception de l'acquiescement attendu, l'unité demanderesse sélectionnée émet alors au moins une cellule de paquet à transmettre, cette émission s'effectue sur la liaison L2 par l'intermédiaire duquel cette unité demanderesse a transmis sa requête. La poursuite de l'émission de l'unité demanderesse sélectionnée est, suivant le cas, soit fonction du contenu de l'élément d'acquiescement reçu, soit du maintien du niveau zéro électrique par l'unité demandée.

Lorsque, comme indiqué plus haut, l'itinéraire d'un paquet entrant au niveau d'une unité dans l'installation, n'est pas clairement déterminé et que par conséquent l'unité destinataire n'est pas connue, il est prévu de diffuser une cellule comportant notamment au moins une partie de l'entête de ce paquet vers les unités susceptibles d'être destinataires.

Ceci implique, au moins en principe, qu'une première cellule soit établie à partir du paquet reçu, pour chaque liaison L2 reliée à l'unité ayant reçu ce paquet au niveau de l'installation, en vue de faire rechercher par chaque unité du sous-réseau paquet, si la cellule qu'elle reçoit est susceptible de la concerner.

Les figures 4 et 5 se rapportent à une forme de réalisation dans un cas simple où seules quatre unités 2B, 2E, 2F et 3Z de sous-réseau paquet sont présentées et où un paquet à destination à déterminer est reçu par l'installation au niveau d'une de ces quatre unités, par exemple 3Z.

Il est ici prévu de faire produire trois premières cellules similaires à partir du paquet, par exemple au niveau du circuit de communication 9 de l'unité réceptrice 3Z.

Chacune de ces trois cellules D1, dites de recherche, se différencie des deux autres par une indication d'adresse supplémentaire différente en vue de son orientation par le module de commutation 11 de l'unité 3Z vers l'un des éléments unidirectionnels de liaison L2, ici référencés L2ZB, L2ZE ou L2ZF, desservant respectivement les unités 2B, 2E, 2F.

Préalablement trois requêtes RE ont été simultanément émises par le circuit de communication 9 de l'unité 3Z sur les éléments L2ZB, L2ZE, L2ZF en vue d'obtenir une autorisation d'émission GR de chacune des unités 2B, 2E, 2F.

Chaque cellule de recherche, ici référencée D1 est alors indépendamment émise sur celui des éléments de liaison L2ZB, L2ZE ou L2ZF que désigne son indication d'adresse supplémentaire et ce dès réception par l'unité de l'acquiescement transmis sur l'élément unidirectionnel L2BZ, L2EZ ou L2FZ de liaison L2 transmettant en sens opposé de celui par lequel elle va être transmise.

Le contenu de chaque cellule de recherche est traité par l'unité qu'il atteint en vue de déterminer si le destinataire désigné est susceptible d'être joint par cette unité, si tel est le cas cette unité, par exemple 2B, envoie un acquiescement spécifique ACK à l'unité ayant émis cette cellule de recherche par l'intermédiaire de la liaison L2 qui les unit, soit L2BZ dans l'exemple choisi. Ceci s'effectue dans des conditions analogues à celles déjà décrites plus haut, soit pratiquement par l'envoi d'un élément d'en-tête particulier par l'unité pour signifier quelle est destinataire. L'itinéraire dans l'installation pour le paquet peut être considéré comme défini pour les cellules D2, D3... qui constituent la suite de ce paquet.

Les possibilités de diffusion évoquées ci-dessus sont également susceptibles d'être exploitées pour la communication d'un même paquet à plusieurs unités du sous-réseau paquet. Chacune des unités destinataires émet indépendamment l'élément d'en-tête particulier signifiant quelle est destinataire, suite à la réception d'une cellule de recherche D1 pour ce paquet à diffuser, afin de recevoir ensuite la succession de cellules D2, D3..... relatives à ce paquet.

Cette succession peut soit être émise autant de fois qu'il y a d'unités destinataires ou alternativement être diffusée cellule après cellule vers toutes ces unités suivant le trafic et les besoins.

## Revendications

1. Procédé de communication entre unités supports de mode paquet (1, 2, 3) interconnectées au coeur d'une installation de communication par des liaisons point-à-point (L2) structurées physiquement et régies temporellement de manière identique, caractérisé en ce que la transmission d'un paquet entre deux unités supports de mode paquet de l'installation implique l'envoi d'une requête préalable, pour ce paquet, de l'unité désireuse d'émettre à l'unité destinataire et l'envoi en réponse d'un acquiescement correspondant, pour ce paquet, de cette unité destinataire.

2. Procédé de communication selon la revendication 1, caractérisé en ce que le moment d'envoi d'un acquiescement par une unité support de mode paquet (1, 2, 3), par l'intermédiaire d'une liaison point-à-point (L2) reliant cette unité à une autre unité support de mode paquet qui lui a préalablement envoyé une requête en émission, via cette même liaison, est déterminé par le résultat d'une contention entre les unités supports de mode paquet du coeur de l'installation ayant alors elles-mêmes transmis des requêtes en émission individuelles encore insatisfaites vers cette même unité destinataire.

3. Procédé de communication selon la revendication 1, caractérisé en ce qu'une indication supplémentaire d'adresse pour l'installation est affectée à chaque paquet à transmettre d'une unité support de mode paquet vers une autre dans l'installation pour permettre l'orientation au dudit paquet vers la liaison point-à-point reliant l'unité émettrice à l'unité destinataire dans l'installation.

4. Procédé de communication selon la revendication.3, caractérisé en ce que l'indication d'adresse supplémentaire d'un paquet qui est fonction de l'adresse de destination figurant dans ce paquet, est au moins initialement obtenue par un processus au cours duquel l'unité support de mode paquet ayant à transmettre ce paquet interroge les autres unités supports de mode paquet de l'installation par envoi d'un en-tête de paquet contenant cette adresse de destination en vue d'obtenir un acquiescement spécifique d'une de ces unités qui se signale, après recherche, comme susceptible de desservir cette adresse de destination et qui par cet acquiescement permet de définir, au niveau de l'unité ayant à transmettre, l'indication d'adresse supplémentaire à associer au paquet, en relation avec l'adresse de l'unité ayant émis ledit acquiescement spécifique et/ou de la liaison point-à-point (L2) joignant ces deux unités.

5. Procédé de communication selon la revendication 3, caractérisé en ce qu'un stockage est effectué au niveau de chaque unité support de mode paquet pour permettre de mémoriser au moins temporairement des indications d'adresse supplémentaires, en association avec les adresses de destination et éventuellement de source telles que figurant dans les paquets à transmettre au travers de l'installation pour permettre une association immédiate, à un paquet entrant comportant une de ces adresses, de l'indication supplémentaire d'adresse mémorisée correspondante déjà mémorisée, en vue de l'orientation dans l'installation de ce paquet entrant.

6. Agencement de communication entre unités supports de mode paquet interconnectées au coeur d'une installation de communication par des liaisons point-à point (L2) formant un sous-réseau de communication où toutes les liaisons sont structurées physiquement et régies temporellement de manière identique, caractérisé en ce qu'il constitue un commutateur asynchrone de type réparti où chaque unité support de mode paquet, qu'elle soit de type unité de commande (1), unité auxiliaire (3) ou coupleur (2) pour postes et/ou terminaux de communication, comporte un même circuit de communication de paquets (9), auquel les liaisons point-à-point (L2) aboutissant à l'unité sont reliées par l'intermédiaire d'un module de commutation (11), pour conditionner sous forme d'une suite de cellules chaque paquet à transmettre, vers une autre unité support de mode paquet de l'installation, par l'unité dont ce circuit fait partie, ainsi que pour assurer la reconstitution d'un paquet au niveau de cette unité qui le comporte à partir des cellules correspondantes reçues au travers d'une des liaisons point-à-point reliées à cette unité, chaque unité support de mode paquet désireuse de transmettre vers une unité destinataire sur une liaison point-à-point étant tenue d'émettre une requête vers cette unité destinataire et d'attendre un acquiescement émis par cette unité destinataire.

7. Agencement de communication, selon la revendication 6, caractérisé en ce que le circuit de communication de paquet (9) d'une unité, qui est associé à un processeur de supervision (10) et à une mémoire tampon (8), comporte des moyens pour ajouter une indication d'adresse, dite supplémentaire, à tout paquet à transmettre par l'unité considérée à une autre unité support de mode paquet de l'installation via la liaison point-à-point (L2) qui les unit, le module de commutation (11) de ladite unité considérée disposant de moyens pour orienter les cellules d'un paquet à transmettre dans l'installation, vers la liaison point-à-point concernée, en fonction de l'indication d'adresse supplémentaire affectée à ce paquet.

8. Agencement de communication, selon la revendication 7, caractérisé en ce que le circuit de communication de paquet (9) d'une unité est associé à au moins un contrôleur de communication (5) par l'intermédiaire duquel il reçoit des paquets à transmettre dans l'installation et auquel il transmet des paquets reçus par l'intermédiaire des liaisons point-à-point (L2), ce contrôleur disposant de moyens pour affecter une indication d'adresse supplémentaire à chaque paquet à transmettre dans l'installation, à partir des indications d'adresse figurant en tête de ces paquets et d'indications préalablement fournies par les unités supports de mode paquets qui sont destinataires.

9. Agencement de communication, selon la revendication 8, caractérisé en ce que chaque unité support de mode paquet dispose de moyens de contention lui permettant de contrôler l'émission vers elle-même des autres unités supports de mode paquet qui sont directement reliées à elle par liaison point-à-point (L2).

10. Agencement de communication, selon la revendication 9, caractérisé en ce qu'il comporte des moyens (8) permettant de conserver des indications supplémentaires d'adresse avec des adresses de destination et éventuellement de source de paquet correspondantes pour permettre une affectation et une orientation directe sans autre recherche de tout paquet à transmettre dans l'installation qui comporte en en-tête une adresse de destination conservée.

## Patentansprüche

1. Verfahren zur Datenübertragung zwischen Paketbetrieb unterstützenden Einheiten (1, 2, 3), die innerhalb einer Datenübertragungsanlage über Punkt-zu-Punkt-Verbindungen (L2) untereinander verbunden sind, die physikalisch gleich strukturiert und zeitlich in gleicher Weise verwaltet werden, **dadurch gekennzeichnet,** dass die Übertragung eines Pakets zwischen zwei Paketbetrieb unterstützenden Einheiten der Anlage das Abschicken einer vorherigen Anfrage für dieses Paket von der Einheit, die senden will, an die Empfängereinheit und das Abschicken einer entsprechenden Quittung als Antwort für dieses Paket von dieser Empfängereinheit impliziert.

2. Verfahren zur Datenübertragung nach Anspruch 1, dadurch gekennzeichnet, dass der Zeitpunkt des Abschickens einer Quittung durch eine Paketbetrieb unterstützende Einheit (1, 2, 3) über eine Punkt-zu-Punkt-Verbindung (L2), die diese Einheit mit einer anderen Paketbetrieb unterstützenden Einheit verbindet, die ihr zuvor über diese gleiche Verbindung eine Sendeanforderung geschickt hat, durch das Ergebnis eines Wettbewerbs zwischen den Paketbetrieb unterstützenden Einheiten innerhalb der Anlage bestimmt wird, die dann selber individuelle, noch unbefriedigte Sendeanforderungen an diese gleiche Empfängereinheit geschickt haben.

3. Verfahren zur Datenübertragung nach Anspruch 1, dadurch gekennzeichnet, dass eine zusätzliche Adressangabe für die Anlage jedem von einer Paketbetrieb unterstützenden Einheit an eine andere in der Anlage zu sendenden Paket zugewiesen wird, um die Orientierung des Pakets zu der Punkt-zu-Punkt-Verbindung zu ermöglichen, die die Sendereinheit mit der Empfängereinheit in der Anlage verbindet.

4. Verfahren zur Datenübertragung nach Anspruch 3, dadurch gekennzeichnet, dass die zusätzliche Adressangabe eines Pakets, die eine Funktion der in diesem Paket enthaltenen Empfängeradresse ist, wenigstens anfangs durch einen Prozess erhalten wird, in dessen Verlauf die Paketbetrieb unterstützende Einheit, die dieses Paket zu übertragen hat, die anderen Paketbetrieb unterstützenden Einheiten der Anlage durch Schicken eines Paket-Headers, der diese Empfängeradresse enthält, abfragt, um eine spezifische Quittung von einer dieser Einheiten zu bekommen, die sich nach Untersuchung bereit erklärt, diese Empfängeradresse zu bedienen und die durch diese Quittung es ermöglicht, an der Einheit, die senden muss, die diesem Paket zuzuordnende zusätzliche Adressangabe in Beziehung mit der Adresse der Einheit, die diese spezifische Quittung gesendet hat, und/oder der diese zwei Einheiten verbindenden Punkt-zu-Punkt-Verbindung (L2) zu definieren.

5. Verfahren zur Datenübertragung nach Anspruch 3, dadurch gekennzeichnet, dass eine Speicherung an jeder Paketbetrieb unterstützenden Einheit durchgeführt wird, um eine wenigstens zeitweilige Speicherung der zusätzlichen Adressangaben in Zuordnung zu den Empfänger- und ggf. Quelladressen zu ermöglichen, wie sie in den durch die Anlage zu übertragenden Paketen vorkommen, um die sofortige Zuordnung, zu einem eine dieser Adressen aufweisenden ankommenden Paket, der entsprechenden bereits gespeicherten zusätzlichen Adressangabe zum Zweck der Orientierung dieses ankommenden Pakets in der Anlage zu ermöglichen.

6. Anordnung zur Datenübertragung zwischen Paketbetrieb unterstützenden Einheiten, die innerhalb einer Datenübertragungsanlage über Punkt-zu-Punkt-Verbindungen (L2) untereinander verbunden sind, die ein Unter-Datenübertragungsnetzwerk bilden, wo alle Verbindungen physikalisch gleich strukturiert sind und zeitlich in gleicher Weise verwaltet werden, dadurch gekennzeichnet, dass sie einen asynchronen Vermittler vom verteilten Typ bildet, wo jede Paketbetrieb unterstützende Einheit, egal ob vom Typ Steuereinheit (1), Hilfseinheit (3) oder Koppler (2) für Datenübertragungsendgeräte oder Stationen, eine gleiche Paket-Datenübertragungsschaltung (9) umfasst, mit der die an der Einheit mündenden Punkt-zu-Punkt-Verbindungen (L2) über ein Vermittlungsmodul (11) verbunden sind, um jedes zu einer anderen Paketbetrieb unterstützenden Einheit der Anlage zu übertragende Paket in Form einer Folge von Zellen durch diejenige Einheit zu konditionieren, von der diese Schaltung ein Teil ist, sowie um die Wiederherstellung eines Pakets an dieser Einheit, die sie umfasst, aus den entsprechenden, über eine der mit dieser Einheit verbundenen Punkt-zu-Punkt-Verbindungen empfangenen Zellen zu gewährleisten, wobei jede Paketbetrieb unterstützende Einheit, die Daten an eine Empfängereinheit über eine Punkt-zu-Punkt-Verbindung übertragen will, gehalten ist, eine Anforderung an diese Empfängereinheit zu senden und eine von dieser Empfängereinheit gesendete Quittung abzuwarten.

7. Anordnung zur Datenübertragung nach Anspruch 6, dadurch gekennzeichnet, dass die Paket-Datenübertragungsschaltung (9) einer Einheit, die einem Überwachungsprozessor (10) und einem Pufferspeicher (8) zugeordnet ist, Mittel zum Hinzufügen einer als zusätzlich bezeichneten Adressangabe zu jedem Paket umfasst, das von der betreffenden Einheit an eine andere Paketbetrieb unterstützende Einheit der gleichen Anlage über die sie verbindende Punkt-zu-Punkt-Verbindung (L2) übertragen werden soll, wobei das Vermittlungsmodul (11) der betreffenden Einheit über Mittel verfügt, um die Zellen eines zu übertragenden Pakets in der Anlage in Abhängigkeit von der diesem Paket zugewiesenen zusätzlichen Adressangabe zu der betreffenden Punkt-zu-Punkt-Verbindung zu orientieren.

8. Anordnung zur Datenübertragung nach Anspruch 7, dadurch gekennzeichnet, dass die Paket-Datenübertragungsschaltung (9) einer Einheit wenigstens einem Datenübertragungs-Controller (5) zugeordnet ist, über den sie in der Anlage zu übertragende Pakete empfängt und an den sie über Punkt-zu-Punkt-Verbindungen (L2) empfangene Pakete überträgt, wobei der Controller über Mittel verfügt, um eine zusätzliche Adressangabe jedem in der Anlage zu übertragenden Paket anhand der Adressangaben, die am Kopf dieser Pakete vorkommen, und von Angaben, die vorab von den Paketbetrieb unterstützenden Einheiten, die Empfänger sind, geliefert werden, zuzuweisen.

9. Anordnung zur Datenübertragung nach Anspruch 8, dadurch gekennzeichnet, dass jede Paketbetrieb unterstützende Einheit über Wettbewerbsmittel verfügt, die es ihr ermöglichen, das Senden an sie der anderen Paketbetrieb unterstützenden Einheiten, die direkt mit ihr durch Punkt-zu-Punkt-Verbindung (L2) verbunden sind, zu steuern.

10. Anordnung zur Datenübertragung nach Anspruch 9, dadurch gekennzeichnet, dass sie Mittel (8) umfasst, die es ihr erlauben, zusätzliche Adressangaben mit Empfängeradressen und ggf. entsprechenden Quelladressen eines Pakets aufzubewahren, um eine Zuweisung und direkte Orientierung ohne weitere Untersuchung eines jeden in der Anlage zu übertragenden Pakets zu ermöglichen, das im Header eine aufbewahrte Empfängeradresse aufweist.

## Claims

1. A communications method between packet mode supporting units (1. 2, 3) interconnected in the core of a communications installation by point-to-point links (L2) that are physically structured and time governed in identical manner, the method being characterized in that a packet is transmitted between two packet mode supporting units of the installation by the unit desiring to transmit the packet previously sending a request concerning the packet to the destination unit, and by the destination unit responding by means of a corresponding acknowledgment for the packet.

2. A communications method according to claim 1, characterized in that the moment at which an acknowledgment is returned by a packet mode supporting unit (1, 2, 3) over a point-to-point link (L2) connecting said unit to another packet mode supporting unit which has previously sent a transmission request thereto over said link is determined as a result of conflict between the packet mode supporting units in the core of the installation that have themselves transmitted as-yet unsatisfied respective transmission requests to the same destination unit.

3. A communications method according to claim 1, characterized in that additional address information concerning the installation is given to each packet to be transmitted from one packet mode supporting unit to another within the installation in order to enable said packet to be directed towards the point-to-point link that connects the transmitting unit to the destination unit within the installation.

4. A communications method according to claim 3, characterized in that the additional address information in a packet which is a function of the destination address that appears in the packet is, at least initially, obtained by a process during which the packet mode supporting unit that needs to transmit the packet interrogates the other packet mode supporting units of the installation by sending a packet header containing said destination address in order to obtain a specific acknowledgment from one of said units which, after the unit has made a search, indicates that the unit is capable of serving said destination address, and by said acknowledgment makes it possible for the unit that is to transmit to define the additional address information to be associated with the packet in association with the address of the unit that transmitted said specific acknowledgment and/or the point-to-point link (L2) interconnecting said two units.

5. A communications method according to claim 3, characterized in that each packet mode supporting unit performs storage to enable it to store, at least temporarily, additional address information in association with destination addresses and optionally in association with source addresses as they appear in the packets to be transmitted through the installation, thereby enabling an incoming packet including one of said addresses to be associated immediately with the already-stored corresponding stored additional address information for the purpose of directing the incoming packet through the installation.

6. A communications facility between packet mode supporting units in the core of a communications installation that are interconnected by point-to-point links (L2) forming a communications sub-network where all of the links are physically structured and time governed in identical manner, the facility being characterized in that it constitutes a distributed type asynchronous switch where each packet mode supporting unit regardless of whether it is of the control unit type (1), of the auxiliary unit type (3), or of the coupler unit type (2) for communications terminals and/or stations includes the same type of packet communication circuit (9) to which the point-to-point links (L2) terminating at the unit are connected via a switching module (11) to condition each of the packets to be transmitted from the unit including said circuit to another packet mode supporting unit in the installation in the form of a sequence of cells, and also to ensure that the unit including said circuit can build up a packet from the corresponding cells it receives over any one of the point-to-point links connected to said unit, each packet mode supporting unit seeking to transmit to a destination unit over a point-to-point link being required to send a request to said destination unit and to wait for an acknowledgment returned by said destination unit.

7. A communications facility according to claim 6, characterized in that the packet communication circuit (9) of a unit is associated with a supervising processor (10) and with a buffer memory (8), and includes means for adding "additional" address information to any packet that is to be transmitted by the unit in question to another packet mode supporting unit of the installation via the point-to-point (L2) that interconnects them, the switching module (11) of said unit in question including means for directing the cells of a packet to be transmitted through the installation to the corresponding point-to-point link, as a function of the additional address information given to said packet.

8. A communications facility according to claim 7, characterized in that the packet communication circuit (9) of a unit is associated with at least one communication controller (5) via which it receives packets to be transmitted through the installation and to which it transmits packets it has received via point-to-point links (L2), said controller including means for giving additional address information to each packet to be transmitted through the installation on the basis of address information appearing in the headers of said packets and on the basis of information previously provided by the destination packet mode supporting units.

9. A communications facility according to claim 8, characterized in that each packet mode supporting unit includes conflict means enabling it to control transmission to said unit by other packet mode supporting units that are directly connected thereto over respective point-to-point links (L2).

10. A communications facility according to claim 9, characterized in that it includes means (8) enabling additional address information to be stored in association with corresponding packet destination addresses and optionally in association with corresponding packet source addresses in order to enable any packet to be transmitted through the installation that has a stored destination address in its header to be directed and allocated without further searching.
